# EUROPÄISCHE PATENTSCHRIFT

(11) **EP 4 430 994 B1**
(45) Veröffentlichungstag und Bekanntmachung des Hinweises auf die Patenterteilung: **08.04.2026**
(21) Anmeldenummer: 24159918.2
(22) Anmeldetag: 27.02.2024
(51) Int. Cl.: A47J 36/32, H05B 6/06

(54) **KOCHGESCHIRR, KOCHSYSTEM UND VERFAHREN ZUM BETREIBEN**
COOKING VESSEL, COOKING SYSTEM AND METHOD FOR OPERATING
USTENSILE DE CUISSON, SYSTÈME DE CUISSON ET PROCÉDÉ DE FONCTIONNEMENT

(30) Priorität: 16.03.2023 BE 202305195
(43) Veröffentlichungstag der Anmeldung: 18.09.2024
(73) Patentinhaber: Miele & Cie. KG, 33332 Gütersloh (DE)
(72) Erfinder: Wilkens, Henrik, 49080 Osnabrück (DE); Gehring, Nils Marius, 33739 Bielefeld (DE); Krug, Stephan, 61250 Usingen (DE); Niermann, Franziska, 33739 Bielefeld (DE)

(56) Entgegenhaltungen:
- WO-A1-2016/042123
- WO-A1-2022/048836
- FR-A1- 3 098 676
- US-A1- 2012 132 646
- US-A1- 2020 045 781

## Beschreibung

Die vorliegende Erfindung betrifft ein Kochsystem mit einem Kochfeld und einem Kochgeschirr. Das Kochgeschirr umfasst wenigstens einen Boden, wenigstens eine Wandung und wenigstens einen Magnetfeldsensor, wobei durch den Boden und die Wandung wenigstens ein Aufnahmevolumen begrenzt wird. Des Weiteren betrifft die vorliegende Erfindung ein Kochsystem umfassend wenigstens ein solches Kochgeschirr, wenigstens eine Steuereinrichtung und wenigstens eine Kochfeldeinrichtung. Dabei umfasst die Kochfeldeinrichtung wenigstens eine Aufstellfläche zum Aufstellen von Kochgeschirr und wenigstens eine Induktionsspule, wobei die Induktionsspule wenigstens ein elektromagnetisches Feld zum Heizen von aufgestelltem Kochgeschirr bereitstellt. Die vorliegende Erfindung betrifft zudem ein Verfahren zum Betreiben eines solchen Kochsystems.

Ein Kochfeld zum induktiven Erwärmen von Kochgeschirr ist aus den Druckschriften WO 2022 048 836 A1 und US 2012 132 646 A1 bekannt.

Automatisierte und teilautomatisierte Programme sowie unterstützende Funktionen sind bei einer Vielzahl von Haushaltgeräten bekannt geworden. Insbesondere Gargeräte, Kochgeschirre und/oder Kochsysteme weisen oft ein oder auch mehrere solche automatischen und/oder unterstützenden Programme bzw. Funktionen auf, die einem Benutzer bei der Zubereitung von Speisen helfen und/oder einen solchen Prozess automatisch weitgehend selbstständig überwachen und/oder steuern.

So kann beispielsweise ein Automatikprogramm einen Benutzer beim Erwärmen bzw. Erhitzen von Speisen in einem auf einem Kochfeld aufstehenden Kochgeschirr wie z. B. einem Topf, einer Pfanne und/oder dergleichen unterstützen oder auch eine Speise, insbesondere mittels eines geeigneten Temperaturverlaufes, weitgehen selbstständig optimal und zeitgenau garen bzw. zubereiten.

Um die für einen solchen unterstützenden und/oder weitgehend automatischen Zubereitungsprozess wichtigen Größen und Informationen zu erlangen, weisen viele der bekannten Kochgeschirre oft unterschiedliche sensorische Komponenten bzw. Sensorelemente, wie z. B. wenigstens einen Temperatursensor zur Ermittlung wenigstens einer Temperatur, auf.

Ein Kochgeschirr mit Sensoren ist aus den Druckschriften WO 2016042123 A1 und US 2020 045 781 A1 bekannt.

Die Druckschrift FR 3 098 676 A1 offenbart die Kommunikation zwischen Kochfeld und Kochgeschirr.

Solche Sensoren bekannter Kochgeschirre und/oder von solchen Sensoren ermittelte Werte werden jedoch häufig, insbesondere dann wenn die Sensoren einer Wandung des Kochgeschirrs zugeordnet sind, direkt und/oder indirekt durch äußere Störeinflüsse, wie z. B Temperaturgradienten und/oder elektrische und/oder magnetische Felder, beeinflusst und/oder sogar gestört, sodass eine zuverlässige Ermittlung von für den Zubereitungsprozess wichtiger Größen und Informationen im Wesentlichen nicht oder nur eingeschränkt möglich ist. So können z. B. seitlich auf bekanntes Kochgeschirr einwirkende elektromagnetische Felder, insbesondere lokale elektromagnetische Felder, Temperaturmessungen teils erheblich beeinflussen und so z. B. längere Ankochzeiten durch Überschätzung der realen Garguttemperatur, inhomogene Temperaturverteilungen und/oder einen schwankenden Siedeeindruck hervorrufen.

Es ist daher die Aufgabe der vorliegenden Erfindung, ein Kochgeschirr zur Verfügung zu stellen, welches eine zuverlässige Detektion, insbesondere Abschätzung, von möglichen Störeinflüssen auf ein Kochgeschirr ermöglicht.

Diese Aufgabe wird gelöst durch ein Verfahren mit den Merkmalen des Anspruchs 1 und durch ein Kochsystem mit den Merkmalen des Anspruches 9. Bevorzugte Weiterbildungen der Erfindung sind Gegenstand der abhängigen Ansprüche. Weitere Vorteile und Merkmale der Erfindung ergeben sich aus den Ausführungsbeispielen.

Das erfindungsgemäße Kochgeschirr umfasst wenigstens einen Boden, wenigstens eine Wandung und wenigstens einen Magnetfeldsensor, wobei durch den Boden und die Wandung wenigstens ein Aufnahmevolumen begrenzt wird. Dabei ist der Magnetfeldsensor der Wandung und/oder einem Griff des Kochgeschirrs zugeordnet, um eine magnetische Feldstärke eines elektromagnetischen Störfeldes zu ermitteln, sodass eine Einwirkung des elektromagnetischen Störfeldes auf die Wandung abschätzbar bzw. wenigstens annäherungsweise ermittelbar ist.

Dabei ist ein elektromagnetisches Störfeld insbesondere ein wenigstens teilweise neben und/oder seitlich von dem Kochgeschirr auftretendes und/oder bereitgestelltes elektromagnetisches Feld, welches insbesondere nicht den Boden des Kochgeschirrs aufheizt.

Vorzugsweise stört das elektromagnetische Störfeld wenigstens eine Funktion eines Sensorelementes wie z. B. eines Temperatursensors. Vorzugsweise erwärmt und/oder erhitzt ein elektromagnetisches Störfeld wenigstens eine Wandung und/oder wenigstens ein Sensorelement, insbesondere unbeabsichtigt und/oder teilweise. Bevorzugt wirkt ein elektromagnetisches Störfeld, insbesondere lokal, nicht homogen und/oder ungleichmäßig auf die Wandung, insbesondere eine Außenseite der Wandung, des Kochgeschirrs ein.

Vorzugsweise ist der Magnetfeldsensor dazu geeignet und ausgebildet, wenigstens einen Wert einer magnetischen Feldstärke und/oder eines magnetischen Flusses, insbesondere mittels einer induzierten Spannung, zu ermitteln. In zweckmäßigen Weiterbildungen ist der Magnetfeldsensor an einer Außenseite der Wandung angeordnet und/oder aufgenommen. Vorzugsweise ist der Magnetfeldsensor wenigstens abschnittsweise in die Wandung integriert.

In zweckmäßigen Weiterbildungen umfasst das Kochgeschirr wenigstens eine Steuereinrichtung. Vorzugsweise stellt die Steuereinrichtung wenigstens teilweise eine Auswerteeinrichtung zum Auswerten wenigstens eines, insbesondere von dem Magnetfeldsensor ermittelten, Signales und/oder Wertes bereit.

In vorteilhaften Weiterbildungen ist die Steuereinrichtung dazu geeignet und ausgebildet, anhand wenigstens eines Wertes einer magnetischen Feldstärke Rückschlüsse auf eine zu erwartende Erwärmung der Wandung und/oder des Magnetfeldsensors durch ein solches elektromagnetisches Feld zu ziehen.

In zweckmäßigen Weiterbildungen umfasst das Kochgeschirr wenigstens eine Ausgabeeinrichtung zur Ausgabe wenigstens eines optischen, akustischen und/oder haptischen Signales.

Vorzugsweise umfasst das Kochgeschirr wenigstens ein Batterieelement.

Die vorliegende Erfindung bietet viele Vorteile. Ein erheblicher Vorteil ist, dass der Magnetfeldsensor der Wandung zugeordnet ist, um eine magnetische Feldstärke eines elektromagnetischen Störfeldes zu ermitteln, sodass eine Einwirkung des elektromagnetischen Störfeldes auf die Wandung abschätzbar ist.

Hierdurch ist ein elektromagnetisches Störfeld, wie es z. B. von einem seitlich auf das Kochgeschirr einwirkenden elektromagnetischen Feldes bereitgestellt werden kann, besonders zuverlässig detektierbar.

Auch sind dadurch, dass eine magnetische Feldstärke eines elektromagnetischen Störfeldes ermittelbar ist, mögliche Störeinflüsse auf das Kochgeschirr besonders zuverlässig abschätzbar. So kann z. B. aus der ermittelten Feldstärke eines elektromagnetischen Störfeldes auf eine insbesondere lokale Erwärmung der Wandung in der Umgebung des Magnetfeldsensors zurückgeschlossen werden. Hierdurch können z. B. Temperaturwerte und/oder andere Messsignale, welche mittels von der Wandung zugeordneten, insbesondere in der Umgebung des Magnetfeldsensors angeordneten, Sensorelementen ermittelt wurden, korrigiert bzw. angepasst werden, sodass beispielsweise Automatikprogramme einen Benutzer beim Erwärmen bzw. Erhitzen von Speisen in einem auf einem Kochfeld aufstehenden Kochgeschirr zuverlässig unterstützen können und/oder auch zuverlässig eine Speise mittels eines geeigneten Temperaturverlaufes weitgehen selbstständig optimal und zeitgenau garen bzw. zubereiten können.

Bevorzugt wird der Magnetfeldsensor wenigstens abschnittsweise von einem Hallsensorelement, einem Spulenelement und/oder einer Leiterschleife bereitgestellt. Hierdurch ist eine magnetische Feldstärke eines elektromagnetischen Störfeldes besonders zuverlässig ermittelbar.

In vorteilhaften Weiterbildungen ist das Spulenelement dazu geeignet und/oder ausgebildet, wenigstens eine von einem elektromagnetischen Feld bereitgestellte Energie wenigstens teilweise aufzunehmen. Vorzugsweise wird eine mittels des Spulenelementes aufgenommene Energie wenigstens teilweise von dem Batterieelement gespeichert.

Vorzugsweise ist das Hallsensorelement, das Spulenelement und/oder die Leiterschleife parallel zu dem Boden des Kochgeschirrs ausgebildet ist. Durch diese Ausrichtung ist dieser Teil des Magnetfeldsensors parallel zu den Induktionsspulen des entsprechenden Kochfeldes ausgerichtet, falls das Kochgeschirr auf dem Kochfeld steht. Hierdurch kann der Magnetfeldsensor besonders zuverlässig den Einfluss des Magnetfelds auf die Wandung des Kochgeschirrs abschätzen. Weiterhin sind hierdurch vorteilhaft Anwendungen des entsprechenden Bereichs des Magnetfeldsensors beispielsweise zur Energiegewinnung aus dem Induktionsfeld möglich.

Vorzugsweise stellt das Spulenelement wenigstens eine Kommunikationseinrichtung, insbesondere zur Nahfeldkommunikation bereit. In zweckmäßigen Weiterbildungen ist das Spulenelement dazu geeignet und ausgebildet, insbesondere vor, während und/oder nach einem Kochprozess, wenigstens eine Information, zu senden und/oder zu empfangen.

In vorteilhaften Weiterbildungen kann der Magnetfeldsensor, insbesondere das Spulenelement, in wenigstens einem Kommunikationsmodus zur Kommunikation und/oder einem Störfelddetektionsmodus zur Ermittlung wenigstens eines Wertes einer magnetischen Feldstärke betrieben werden. Vorzugsweise wird der Magnetfeldsensor vor und/oder nach einem Kochprozess in dem Kommunikationsmodus und während einem Kochprozess in dem Störfelddetektionsmodus betrieben. Vorzugsweise ist ein Wechsel zwischen dem Kommunikationsmodus und dem Störfelddetektionsmodus manuell und/oder automatisch vornehmbar.

Besonders bevorzugt ist der Wandung wenigstens ein Temperatursensor zugeordnet.

Dabei ist ein Temperatursensor insbesondere ein Sensor zur Ermittlung wenigstens eines Wertes einer Temperatur wie z. B. ein Thermoelement, ein Thermistor und/oder Ähnliches.

Vorzugsweise ist der Temperatursensor wenigstens abschnittsweise an der Wandung angeordnet und/oder aufgenommen. Vorzugsweise ist der Temperatursensor wenigstens abschnittsweise in die Wandung integriert.

In zweckmäßigen Weiterbildungen sind wenigstens zwei oder noch mehr Temperatursensoren der Wandung zugeordnet. Vorzugsweise ist dem Boden wenigstens ein Temperatursensor zugeordnet.

In vorteilhaften Weiterbildungen stellt der Temperatursensor wenigstens abschnittsweise den Magnetfeldsensor bereit. Hierdurch ist das Kochgeschirr besonders kostengünstig.

Insbesondere wird der Magnetfeldsensor wenigstens abschnittsweise von wenigstens zwei Zuleitungen eines Thermoelementes bereitgestellt und/oder wenigstens abschnittsweise gebildet.

Vorzugsweise umschließen die zwei Zuleitungen wenigstens teilweise eine möglichst große Fläche, sodass eine besonders große Spannung in die Zuleitungen des Thermoelementes induzierbar ist. Hierdurch sind geringe oder sogar sehr geringe magnetischen Feldstärken und/oder magnetische Flüsse ermittelbar, sodass ein solcher Magnetfeldsensor besonders empfindlich und und/oder sensitiv ist.

In zweckmäßigen Weiterbildungen ist der Temperatursensor im Wesentlichen in unmittelbarer Umgebung zum Magnetfeldsensor angeordnet. Hierdurch ermittelt der Temperatursensor insbesondere dort eine Temperatur der Wandung, wo auch mittels des Magnetfeldsensors eine Einwirkung des elektromagnetischen Störfeldes auf die Wandung abschätzbar ist. Somit können zum Beispiel besonders zuverlässig Rückschlüsse darüber gezogen werden, ob es vorteilhaft ist, eine mittels des Temperatursensors ermittelte Temperatur zu korrigieren oder sogar, insbesondere bei der Durchführung automatischer Ablaufprogramme, zu vernachlässigen.

Vorzugsweise ist der Temperatursensor unmittelbar benachbart, insbesondere seitlich neben dem Magnetfeldsensor und/oder zwischen der Wandung und dem Magnetfeldsensor, insbesondere auf der Wandung, angeordnet.

Besonders bevorzugt ist wenigstens eine Kommunikationseinrichtung, insbesondere zum Senden und/oder Empfangen wenigstens eines Signals, vorgesehen.

In vorteilhaften Weiterbildungen ist die Kommunikationseinrichtung dazu geeignet und ausgebildet, wenigstens einen Wert einer magnetischen Feldstärke und/oder einen Wert einer Temperatur, insbesondere mittels WLAN, ZigBee, NFC, Bluetooth und/oder einer ähnlichen Kommunikationsverbindung, zu übermitteln. Vorzugsweise übermittelt die Kommunikationseinrichtung wenigstens ein Signal an eine Kochfeldeinrichtung und/oder eine Steuereinrichtung.

Das erfindungsgemäße Kochsystem umfasst wenigstens eine Steuereinrichtung, wenigstens eine Kochfeldeinrichtung und wenigstens ein Kochgeschirr, wie es zuvor beschrieben wurde. Dabei umfasst die Kochfeldeinrichtung wenigstens eine Aufstellfläche zum Aufstellen von Kochgeschirr und wenigstens eine Induktionsspule, wobei die Induktionsspule wenigstens ein elektromagnetisches Feld zum Heizen von aufgestelltem Kochgeschirr bereitstellt. Dabei ist die Steuereinrichtung dazu geeignet und ausgebildet, anhand wenigstens eines mittels des Magnetfeldsensors ermittelten Wertes einer elektromagnetischen Feldstärke Rückschlüsse auf eine zu erwartende Erwärmung der Wandung durch das elektromagnetische Feld zu ziehen.

Insbesondere ist die Steuereinrichtung dazu geeignet und ausgebildet, anhand des wenigstens einen, vorzugsweise in unmittelbarer Umgebung der Wandung, ermittelten Wertes eine Vorhersage, Prognose und/oder Abschätzung über eine zu erwartende Erwärmung der Wandung durch das elektromagnetische Feld zu ziehen.

Vorzugsweise ist die Steuereinrichtung dazu geeignet und ausgebildet, Rückschlüsse auf eine zu erwartende Erwärmung der Wandung, welche vorzugsweise wenigstens teilweise durch unmittelbares Einwirken des elektromagnetischen Feldes auf die Wandung und/oder ein Temperatursensorelement hervorgerufen wird, zu ziehen.

Vorzugsweise ist die Steuereinrichtung von dem Kochgeschirr und/oder Kochfeldeinrichtung umfasst. Je nach Aufgabe und Ausbildung kann die Steuereinrichtung auch von einem mobilen Endgerät, wie z. B. einem Smartphone, einem Tablet und/oder Ähnlichem bereitgestellt werden.

In zweckmäßigen Weiterbildungen umfasst die Kochfeldeinrichtung wenigstens eine Ausgabeeinrichtung zur Ausgabe wenigstens eines optischen, akustischen und/oder haptischen Signals.

Vorzugsweise umfasst die Kochfeldeinrichtung wenigstens zwei oder noch mehr Induktionsspulen.

Auch das erfindungsgemäße Kochsystem weist die zuvor beschriebenen Vorteile eines erfindungsgemäßen Kochgeschirrs auf.

Besonders bevorzugt stehen das Kochgeschirr und/oder die Kochfeldeinrichtung wenigstens zeitweise mit der Steuereinrichtung, insbesondere mittels einer Kommunikationseinrichtung, in Kommunikationsverbindung.

Bei dem erfindungsgemäßen Verfahren zum Betreiben eines Kochsystems, wie es zuvor beschrieben ist, ermittelt der Magnetfeldsensor wenigstens einen Wert einer elektromagnetischen Feldstärke und die Steuereinrichtung zieht anhand des wenigstens einen ermittelten Wertes Rückschlüsse auf eine zu erwartende Erwärmung der Wandung durch das elektromagnetische Feld.

Insbesondere wird anhand des wenigstens einen, vorzugsweise in unmittelbarer Umgebung der Wandung, ermittelten Wertes eine Vorhersage, Prognose, Annäherung und/oder Abschätzung über eine zu erwartende Erwärmung der Wandung durch das elektromagnetische Feld getroffen.

Bevorzugt ist das Kochgeschirr so auf der Aufstellfläche aufgestellt, dass die Induktionsspule wenigstens ein Störfeld, insbesondere seitlich des Kochgeschirrs, erzeugt und die Steuereinrichtung anhand wenigstens eines mittels des Magnetfeldsensors ermittelten Wertes einer elektromagnetischen Feldstärke des Störfeldes Rückschlüsse auf eine zu erwartende Erwärmung der Wandung durch das elektromagnetische Störfeld zieht.

Vorzugsweise stellt das von der Induktionsspule bereitgestellte elektromagnetische Feld wenigstens dann ein elektromagnetisches Störfeld dar, wenn das Kochgeschirr, insbesondere der Boden, nicht vollständig, bevorzugt nur zu 5/6 und/oder 4/3, vorzugsweise nur zu 2/3 und/oder 1/2 und/oder 1/3 oder noch weniger, über der Induktionsspule angeordnet ist. Je nach Aufgabe und Ausgestaltung kann das von der Induktionsspule bereitgestellte elektromagnetische Feld wenigstens auch dann ein elektromagnetisches Störfeld darstellen, wenn eine Fläche über und/oder oberhalb der Induktionsspule nicht vollständig, bevorzugt nur zu 5/6 und/oder 4/3, vorzugsweise nur zu 2/3 und/oder 1/2 und/oder 1/3 oder noch weniger von dem Boden des Kochgeschirrs bedeckt und/oder abgedeckt wird.

In zweckmäßigen Weiterbildungen wird mittels des Magnetfeldsensors wenigstens eine magnetische Feldstärke und/oder wenigstens ein magnetischer Fluss ermittelt.

Auch das erfindungsgemäße Verfahren weist die zuvor für das erfindungsgemäße Kochgeschirr und/oder das erfindungsgemäße Kochsystem beschriebenen Vorteile auf.

Besonders bevorzugt ist der Wandung des Kochgeschirrs wenigstens ein Temperatursensor zugeordnet, welcher wenigstens einen Wert einer Temperatur ermittelt, wobei bei einer Weiterverarbeitung des ermittelten Wertes eine zu erwartende Erwärmung der Wandung durch das elektromagnetische Feld berücksichtigt wird. Hierdurch ist ein von dem wenigstens einen Temperatursensor ermittelter Wert einer Temperatur besonders zuverlässig.

Dabei ist unter Weiterverarbeitung insbesondere eine Auswertung, vorzugsweise mittels der Steuer- und/oder Auswerteeinrichtung, zu verstehen.

Vorzugsweise wird eine zu erwartende Erwärmung der Wandung durch das elektromagnetische Feld bei einer Durchführung und/oder einem Ablauf von, insbesondere automatischen, Betriebs- und/oder Kochprogrammen berücksichtigt. So kann zum Beispiel ein bei einem Kochprogramm an einem Temperatursensor zu erreichender Wert einer Temperatur, z. B. eine Siedetemperatur, wenigstens zeitweise erhöht werden.

In zweckmäßigen Weiterbildungen wird der mittels eines Temperatursensors ermittelte Wert der Temperatur wenigstens zeitweise zu einer niedrigeren Temperatur korrigiert.

Bevorzugt wird der ermittelte Wert wenigstens zeitweise mit einem vorbestimmten Schwellwert verglichen.

Vorzugsweise vergleicht die Steuereinrichtung und/oder die Auswerteeinrichtung den ermittelten Wert mit dem Schwellwert.

In vorteilhaften Weiterbildungen wird der ermittelte Wert einer Temperatur, insbesondere in eine niedrigere Temperatur, korrigiert, wenn der ermittelte Wert einer elektromagnetischen Feldstärke wenigstens zeitweise größer als der vorbestimmte Schwellwert ist.

Vorzugsweise wird wenigstens ein Wert einer Temperatur eines Temperatursensors, optional auch mehrere Werte von Temperaturen mehrerer und/oder aller Temperatursensoren, wenigstens zeitweise, insbesondere in eine niedrigere Temperatur, korrigiert.

In zweckmäßigen Weiterbildungen wird wenigstens einen Wert einer Temperatur eines Temperatursensors nicht berücksichtigt.

Vorzugsweise umfasst das Kochgeschirr wenigstens eine Ausgabeeinrichtung und/oder steht mit wenigstens einer Ausgabeeinrichtung in Wirkverbindung. Bevorzugt gibt die Ausgabeeinrichtung wenigstens ein Signal aus, wenn der ermittelte Wert einer elektromagnetischen Feldstärke wenigstens zeitweise größer als der vorbestimmte Schwellwert ist.

In vorteilhaften Weiterbildungen signalisiert die Ausgabeeinrichtung einem Benutzer, insbesondre mittels eines optischen, akustischen und/oder haptischen Signals, dass der Wert wenigstens zeitweise größer ist als der vorbestimmte Schwellwert.

Je nach Aufgabe und Ausbildung kann die Ausgabeeinrichtung auch im Wesentlichen kontinuierlich den ermittelten Wert der elektromagnetischen Feldstärke ausgeben und/oder mittels eines Anzeigeelementes z. B. in Abhängigkeit von der Position des Kochgeschirrs auf der Aufstellfläche darstellen.

Auch ist es möglich und vorteilhaft, dass, insbesondere bei einem niedrigen Ladezustand des Energieelementes, die Ausgabeeinrichtung einem Benutzer signalisiert, das Kochgeschirr an eine Position auf der Aufstellfläche zu positionieren, an welcher ein großes oder sogar sehr großes Störfeld bereitgestellt wird, umso ein möglichst schnelles Aufladen des Batterieelementes zu ermöglichen.

Vorzugsweise signalisiert die Ausgabeeinrichtung einem Benutzer, dass Kochgeschirr an einer anderen Position auf der Aufstellfläche zu positionieren, um z. B. eine magnetische Feldstärke eines Störfeldes zu verringern.

Bevorzugt ist der Schwellwert abhängig von einer Leistung der Induktionsspule, insbesondere einer in unmittelbarer Umgebung der Induktionsspule bereitgestellten Feldstärke.

Vorzugsweise wird bei einer Erhöhung der Leistung der Induktionsspule bzw. einer Erhöhung einer Leistungsstufe der Kochfeldeinrichtung der Schwellwert erhöht.

In zweckmäßigen Weiterbildungen wird der Magnetfeldsensor wenigstens abschnittsweise von wenigstens einem Spulenelement bereitgestellt, welches wenigstens eine von dem elektromagnetischen Feld bereitgestellte Energie wenigstens teilweise aufnimmt.

Vorzugsweise wird eine von dem Spulenelement aufgenommene Energie zur Energieversorgung eines Temperatursensors und/oder weiterer von dem Kochgeschirr umfasster Baugruppen genutzt. Vorzugsweise wird die aufgenommene Energie in einem Batterieelement wenigstens zeitweise gespeichert.

Besonders bevorzugt wird der Magnetfeldsensor wenigstens abschnittsweise von wenigstens einem Spulenelement bereitgestellt und das Spulenelement sendet und/oder empfängt wenigstens eine Information.

Vorzugsweise sendet das Spulenelement wenigstens eine Information an ein mobiles Endgerät, an die Kochfeldeinrichtung und/oder die Steuereinrichtung. Vorzugsweise empfängt das Spulenelement wenigstens eine Information von einem mobilen Endgerät, der Kochfeldeinrichtung und/oder der Steuereinrichtung.

In zweckmäßigen Weiterbildungen ist das Spulenelement dazu geeignet und ausgebildet, insbesondere vor, während und/oder nach einem Kochprozess, wenigstens eine Information, zu senden und/oder zu empfangen. Vorzugsweise ist das Spulenelement dazu geeignet und ausgebildet, mit wenigstens einem mobilen Endgerät und/oder der Kochfeldeinrichtung zu kommunizieren. So können zum Beispiel mittels des Spulenelementes, insbesondere kochgeschirrspezifische Informationen und/oder Daten, wie z. B. Topfgröße, Ladezustand des Batterieelementes, Nutzungsdaten, Fehlermeldungen und/oder Ähnliches, an ein mobiles Endgerät und/oder die Kochfeldeinrichtung übertragen bzw. übermittelt werden. Je nach Aufgabe und Ausbildung kann auch wenigstens ein Signal zur Identifizierung des Kochgeschirrs und/oder zur Anmeldung des Kochgeschirrs an der Kochfeldeinrichtung, wie z. B. ein Bluetooth- und/oder WLAN-Schlüssel, übertragen werden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine rein schematische Darstellung eines Ausführungsbeispiels eines erfindungsgemäßen Kochgeschirrs in einer perspektivischen Ansicht;
- Figur 2: eine rein schematische Darstellung eines Ausführungsbeispiels eines erfindungsgemäßen Kochsystems mit einem Kochgeschirr in einer in einer perspektivischen Ansicht;
- Figur 3: eine rein schematische Darstellung eines weiteren Ausführungsbeispiels eines erfindungsgemäßen Kochsystems mit einem Kochgeschirr in einer in einer perspektivischen Ansicht;
- Figur 4: eine rein schematische Darstellung eines anderen Ausführungsbeispiels eines erfindungsgemäßen Kochsystems mit einem Kochgeschirr in einer in einer perspektivischen Ansicht; und
- Figur 5: eine rein schematische Darstellung eines weiteren Ausführungsbeispiels eines erfindungsgemäßen Kochsystems mit einem Kochgeschirr in einer in einer perspektivischen Ansicht.

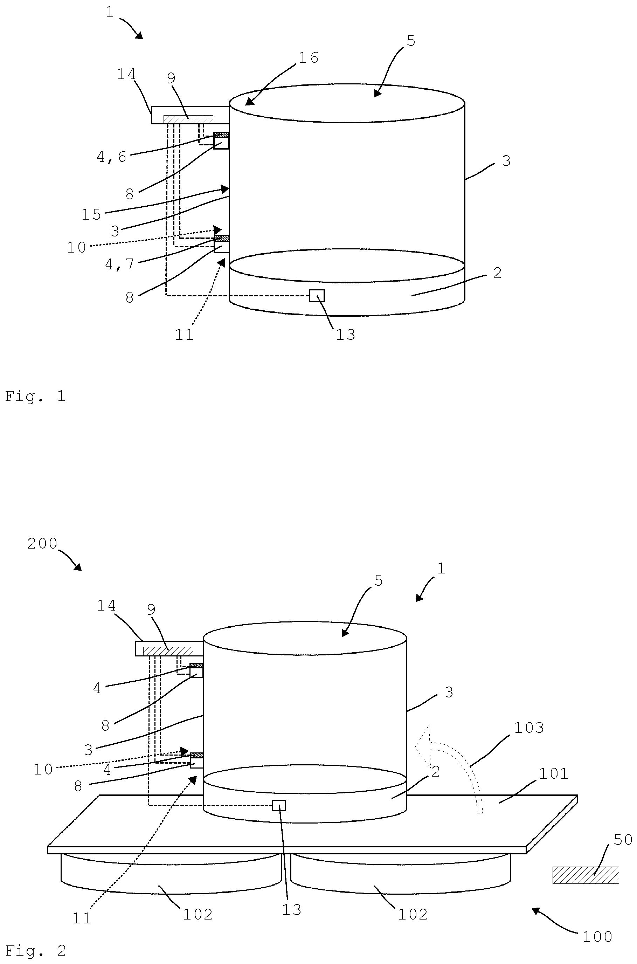

In Figur 1 ist rein schematisch ein Ausführungsbeispiel eines erfindungsgemäßen Kochgeschirrs 1 in einer perspektivischen Ansicht dargestellt.

In dem hier dargestellten Ausführungsbeispiel umfasst das Kochgeschirr 1 einen Boden 2 und eine Wandung 3, welche hier ein Aufnahmevolumen 5 begrenzen. Die Wandung 3 weist hier eine Außenseite 15 und eine hier dem Aufnahmevolumen 5 zugewandte Innenseite 16 auf.

Des Weiteren umfasst das Kochgeschirr 1 hier zwei Magnetfeldsensoren 4, welche hier an der Außenseite 15 angeordnet sind, um hier jeweils eine magnetische Feldstärke eines elektromagnetischen Feldes und/oder Störfeldes zu ermitteln, sodass eine Einwirkung des elektromagnetischen Feldes und/oder Störfeldes auf die Wandung abschätzbar ist. So ist hier zum Beispiel eine Erwärmung, welche hier durch eine direkte im Wesentlichen seitliche Einwirkung eines elektromagnetischen Feldes und/oder Störfeldes auf die Wandung 3 hervorgerufene wurde, abschätzbar.

Somit ist das hier rein schematisch dargestellt Kochgeschirr 1 dazu geeignet und ausgebildet, in einem erfindungsgemäßen Kochsystem 200 verwendet zu werden.

Dadurch, dass hier wenigstens zwei Magnetfeldsensoren 4 an der Außenseite 15 angeordnet sind, ist hier eine lokale Einwirkung des elektromagnetischen Feldes und/oder Störfeldes auf die jeweiligen Abschnitte der Wandung 3, in der hier die Magnetfeldsensoren 4 angeordnet sind, besonders zuverlässig abschätzbar. Auch ist hier ein lokaler Unterschied der magnetischen Feldstärke des elektromagnetischen Feldes und/oder Störfeldes mittels der beiden Magnetfeldsensoren 4 ermittelbar, sodass hier eine inhomogene Einwirkung eines elektromagnetischen Feldes/Störfeldes auf die Wandung 3 ermittelbar ist. Somit kann hier mittels der hier von den zwei Magnetfeldsensoren 4 ermittelten Werte auf eine mögliche zu erwartende inhomogene Erwärmung der Wandung 3 rückgeschlossen werden.

In dem hier dargestellten Ausführungsbeispiel ist ein Magnetfeldsensor 4 als ein Hallsensorelement 6 und der andere Magnetfeldsensor 4 als ein Spulenelement 7 ausgeführt. Je nach Aufgabe und Ausführung kann ein Magnetfeldsensor 4 auch wenigstens abschnittsweise von einem Temperatursensor, wie z. B. einem Thermoelement, bereitgestellt werden.

Des Weiteren umfasst das Kochgeschirr 1 hier zwei der Wandung 3 zugeordnete Temperatursensoren 8, welche hier an der Außenseite 15 der Wandung 3 in unmittelbarer Umgebung zu den Magnetfeldsensoren 4 aufgenommen sind und hier dazu geeignet und ausgeführt sind, jeweils wenigstens einen Wert einer Temperatur 11 zu ermitteln.

In dem hier dargestellten Ausführungsbeispiel sind die hier von den Temperatursensoren 8 ermittelten Werte einer Temperatur 11 jeweils mittels der hier von den zwei Magnetfeldsensoren 4 ermittelten Werte 10 zu niedrigeren Temperaturen korrigierbar.

Je nach Aufgabe und Ausführung kann, wie hier rein schematisch dargestellt, auch dem Boden 2 ein weiterer Temperatursensor 13 zugeordnet sein.

In dem hier dargestellten Ausführungsbeispiel sind die von den Magnetfeldsensoren 4 und den Temperatursensoren 8, 13 ermittelten Werte 10, 11 mittels einer hier in einem Griffelement 14 aufgenommenen Kommunikationseinrichtung 9 an z. B. eine Steuereinrichtung 50 bzw. eine Auswerteeinrichtung übermittelbar.

In Figur 2 ist rein schematisch ein Ausführungsbeispiel eines erfindungsgemäßen Kochsystems 200 mit einem erfindungsgemäßen Kochgeschirr 1 und mit einer Kochfeldeinrichtung 100 in einer perspektivischen Ansicht dargestellt.

In dem hier dargestellten Ausführungsbeispiel umfasst die Kochfeldeinrichtung 100 eine Aufstellfläche 101 zum Aufstellen von Kochgeschirr 1 und zwei Induktionsspulen 102, welche hier jeweils ein elektromagnetisches Feld 103 zum Heizen von aufgestelltem Kochgeschirr 1 bereitstellten. Wie hier mittels eines Pfeiles rein schematisch angedeutet, wird hier das elektromagnetische Feld 103 teilweise seitlich des Kochgeschirrs 1 bereitgestellt, sodass hier das von den in dem gezeigten Ausführungsbeispiel zwei Induktionsspulen 102 bereitgestellte elektromagnetisches Feld 103 ein elektromagnetisches Störfeld darstellt.

Des Weiteren umfasst hier die Kochfeldeinrichtung 100 eine Steuereinrichtung 50. Je nach Aufgabe und Ausführung kann die Steuereinrichtung 50 auch von dem Kochgeschirr 1 und/oder einem mobilen Endgerät bereitgestellt werden.

In dem hier dargestellten Ausführungsbeispiel ist das Kochgeschirr 1 wie in Figur 1 rein schematisch dargestellt ausgeführt und umfasst hier zwei der Wandung 3 zugeordnete Magnetfeldsensoren 4, um hier jeweils eine magnetische Feldstärke eines elektromagnetischen Feldes und/oder Störfeldes zu ermitteln, sodass hier eine Einwirkung des elektromagnetischen Feldes und/oder Störfeldes auf die Wandung abschätzbar ist.

Wie in Figur 1 sind auch in dem hier dargestellten Ausführungsbeispiel die von den Magnetfeldsensoren 4 ermittelten Werte 10 mittels einer hier in einem Griffelement 14 aufgenommenen Kommunikationseinrichtung 9 an die Steuereinrichtung 50 übermittelbar.

Dabei ist hier die Steuereinrichtung 50 dazu geeignet und ausgebildet, anhand eines mittels der hier zwei Magnetfeldsensoren 4 ermittelten Wertes 10 Rückschlüsse auf eine zu erwartende Erwärmung der Wandung 3 durch das elektromagnetische Feld 103 zu ziehen.

Somit kann mittels des hier dargestellten Kochsystems 200 das erfindungsgemäße Verfahren zum Betreiben eines Kochsystems 200 durchgeführt werden.

In dem hier dargestellten Ausführungsbeispiel wird mittels der hier zwei Temperatursensoren 8 jeweils ein Werte 11 einer Temperatur ermittelt und hier mittels der Kommunikationseinrichtung 9 an die Steuereinrichtung gesendet. Bei einer Weiterverarbeitung und/oder Auswertung der Werte 11 berücksichtigt hier die Steuereinrichtung 50 die zu erwartende Erwärmung der Wandung durch das elektromagnetische Feld 103. So können hier z. B. die hier zwei ermittelten Werte 10 jeweils mit einem vorbestimmten Schwellwert S1 verglichen werden. Überschreitet einer der hier zwei ermittelten Werte 10 den vorbestimmten Schwellwert S1, so wird hier ein solcher Wert 11 einer Temperatur in eine niedrigere Temperatur korrigiert und/oder bei einer Weiterverarbeitung mittels der Steuereinrichtung 50 nicht weiter berücksichtigt.

Hierdurch gibt hier ein korrigierter Wert eines ermittelten Wertes 11 einer Temperatur im Wesentlichen eine Temperatur der Wandung 3 wieder, welche durch einen Wärmeeintrag in die Wandung 3 über den Boden 2 und/oder ein in dem Kochgeschirr 1 aufgenommenen Nahrungsmittel erreicht wurde. Somit berücksichtigt hier ein solcher korrigierter Wert einen Wärmeeintrag in die Wandung 3 durch ein hier von den Induktionsspulen 102 bereitgestellten seitlichen elektromagnetischen Feld 103 und/oder Störfeld und eine hier damit verbundene Erhöhung eines ermittelten Wertes 11 einer Temperatur. Ein solcher korrigierter Wert ist somit besonders zuverlässig und gibt hier eine im Wesentlichen durch eine homogene Erwärmung der Wandung 3 erzielte Temperatur der Wandung 3 wieder.

In dem hier dargestellten Ausführungsbeispiel ist der Schwellwert S1 abhängig von einer Leistung der Induktionsspulen 102, sodass hier der Schwellwert S1 mit einer zunehmenden Leistung und/oder Leistungsstufe der hier zwei Induktionsspulen 102 ansteigt.

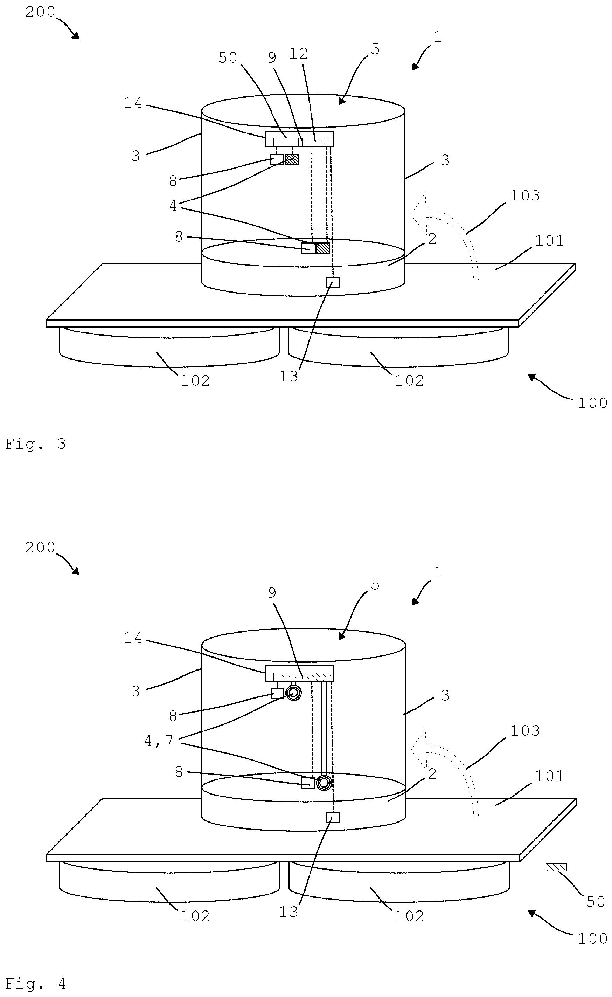

In Figur 3 ist rein schematisch ein anderes Ausführungsbeispiel eines erfindungsgemäßen Kochsystems 200 mit einem erfindungsgemäßen Kochgeschirr 1 und mit einer Kochfeldeinrichtung 100 dargestellt.

Auch in dem hier dargestellten Ausführungsbeispiel umfasst Kochfeldeinrichtung 100 eine Aufstellfläche 101 und zwei Induktionsspulen 102, welche hier ein elektromagnetisches Feld 103 bereitstellen. Da hier eine Fläche unmittelbar oberhalb der hier zwei Induktionsspulen 102 nur teilweise von einem Boden 2 des Kochgeschirrs 1 bedeckt und/oder abgedeckt wird, wird hier ein teilweise seitlich des Kochgeschirrs 1 angeordnetes elektromagnetisches Feld von den Induktionsspulen 102 als elektromagnetisches Störfeld bereitgestellt.

Wie in Figur 1 umfasst in dem hier dargestellten Ausführungsbeispiel das Kochgeschirr 1 zwei Magnetfeldsensoren 4 und zwei Temperatursensoren 8, wobei hier die Temperatursensoren 8 jeweils in unmittelbarer Umgebung eines der Magnetfeldsensoren 4 angeordnet sind. Die Magnetfeldsensoren 4 sind hier der Wandung 3 zugeordnete, um hier jeweils eine magnetische Feldstärke eines elektromagnetischen Feldes und/oder Störfeldes zu ermitteln, sodass hier eine Einwirkung des elektromagnetischen Feldes und/oder Störfeldes auf die Wandung abschätzbar ist.

Im Unterschied zu den Figuren 1 und 2 umfasst das Kochgeschirr 1 hier eine Steuereinrichtung 50, eine Kommunikationseinrichtung 9 und eine Ausgabeeinrichtung 12, welche hier jeweils in einem Griffelement 14 aufgenommene sind. Je nach Aufgabe und Ausführung kann das Kochgeschirr 1 auch mit einer Ausgabeeinrichtung 12 in Wirkverbindung stehen.

In dem hier dargestellten Ausführungsbeispiel ist die Steuereinrichtung 50 dazu geeignet und ausgebildet, anhand eines mittels der hier zwei Magnetfeldsensoren 4 ermittelten Wertes 10 Rückschlüsse auf eine zu erwartende Erwärmung der Wandung 3 durch das elektromagnetische Feld 103 zu ziehen.

Somit kann mittels des hier dargestellten Kochsystems 200 das erfindungsgemäße Verfahren zum Betreiben eines Kochsystems 200 durchgeführt werden.

Wie in Figur 2 werden hier die hier zwei ermittelten Werte 10 jeweils mit einem vorbestimmten Schwellwert S1 verglichen. Überschreitet hier einer der Werte 10 den vorbestimmte Schwellwert S1, gibt hier die Ausgabeeinrichtung 12 ein Signal aus, um hier einen Benutzer z. B. darauf hinzuweisen, dass hier ein erhebliches elektromagnetisches Störfeld vorhanden ist und/oder der Boden 2 des Kochgeschirrs 1 die Fläche unmittelbar oberhalb der zwei Induktionsspulen 102 nur teilweise bedeckt. Je nach Aufgabe und Ausführung kann die Ausgabeeinrichtung 12 auch einem Benutzer signalisieren, dass z. B. die Position des Kochgeschirrs 1 auf der Aufstellfläche 101 verändert werden sollte, um eine magnetische Feldstärke eines Störfeldes und somit eine dadurch verursachte Erwärmung der Wandung 3 zu verringern und/oder zu vermeiden.

In Figur 4 ist rein schematisch ein weiteres Ausführungsbeispiel eines erfindungsgemäßen Kochsystems 200 mit einem erfindungsgemäßen Kochgeschirr 1 und mit einer Kochfeldeinrichtung 100 in einer perspektivischen Ansicht dargestellt.

Wie in Figur 2 umfasst die Kochfeldeinrichtung 100 hier eine Aufstellfläche 101 zum Aufstellen von Kochgeschirr 1 und zwei Induktionsspulen 102, welche hier jeweils ein elektromagnetisches Feld 103 zum Heizen von aufgestelltem Kochgeschirr 1 bereitstellten. Auch hier stellen die hier zwei Induktionsspulen 102 ein elektromagnetisches Feld 103 als elektromagnetisches Störfeld seitlich vom Kochgeschirr 1 bereit. Des Weiteren umfasst die Kochfeldeinrichtung hier eine Steuereinrichtung 50.

Wie in Figur 2 umfasst in dem hier dargestellten Ausführungsbeispiel das Kochgeschirr 1 zwei Magnetfeldsensoren 4 und zwei Temperatursensoren 8, wobei hier die Temperatursensoren 8 jeweils in unmittelbarer Umgebung eines der Magnetfeldsensoren 4 angeordnet sind.

Die Magnetfeldsensoren sind hier jeweils als ein Spulenelement 7 ausgeführt und einer Wandung 3 des Kochgeschirrs 1 zugeordnete, um hier jeweils eine magnetische Feldstärke eines elektromagnetischen Feldes 103 und/oder Störfeldes zu ermitteln, sodass hier eine Einwirkung des elektromagnetischen Feldes 103 und/oder Störfeldes auf die Wandung abschätzbar ist.

Dabei können hier die als Spulenelemente 7 ausgeführten Magnetfeldsensoren 4 jeweils in einem Kommunikationsmodus zur Kommunikation mit einer Steuereinrichtung 50 und in einem Störfelddetektionsmodus zur Ermittlung wenigstens eines Wertes 10 einer magnetischen Feldstärke betrieben werden. So kann hier ein Spulenelement 7 z. B. eine Information an ein mobiles Endgerät und/oder die Steuereinrichtung 50 sendet und/oder eine Information empfängt. Auch können hier die Spulenelemente 7 jeweils eine von dem elektromagnetischen Feld 103 bereitgestellte Energie teilweise aufnehmen. Je nach Aufgabe und Ausführung kann eine solche Energie zur Energieversorgung der Magnetfeldsensoren 4, der Temperatursensoren 8 und/oder einer vom Kochgeschirr 1 umfassten Kommunikationseinrichtung 9 genutzt werden.

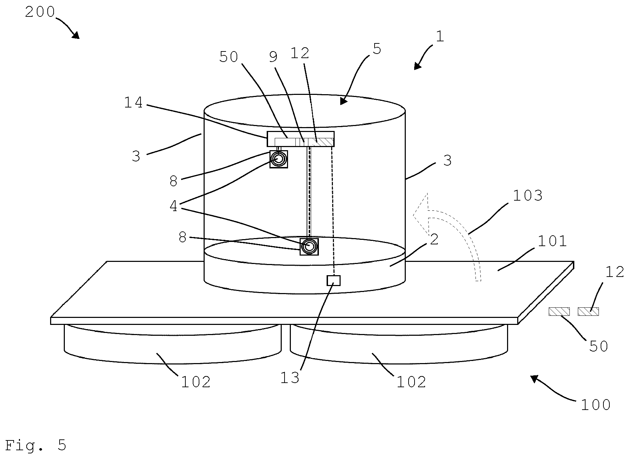

In Figur 5 ist rein schematisch ein weiteres Ausführungsbeispiel eines erfindungsgemäßen Kochsystems 200 mit einem erfindungsgemäßen Kochgeschirr 1 und mit einer Kochfeldeinrichtung 100 in einer perspektivischen Ansicht dargestellt.

In dem hier dargestellten Ausführungsbeispiel umfasst die Kochfeldeinrichtung 100 hier eine Steuereinrichtung 50, eine Ausgabeeinrichtung 12 zur Ausgabe eines Signales, eine Aufstellfläche 101 zum Aufstellen von Kochgeschirr 1 und zwei Induktionsspulen 102, welche hier jeweils ein elektromagnetisches Feld 103 zum Heizen von aufgestelltem Kochgeschirr 1 bereitstellten.

Das Kochgeschirr 1 umfasst hier einen Boden 2, eine Wandung 3, zwei Temperatursensoren 8 und zwei Magnetfeldsensoren 4, welche hier an der Außenseite 15 der Wandung 3 angeordnet sind, um hier jeweils eine magnetische Feldstärke eines elektromagnetischen Feldes 103 und/oder Störfeldes zu ermitteln, sodass eine Einwirkung des elektromagnetischen Feldes 103 und/oder Störfeldes auf die Wandung 3 abschätzbar ist.

In dem hier dargestellten Ausführungsbeispiel sind die hier zwei Temperatursensoren 8 jeweils seitlich unter einem der Magnetfeldsensoren 4, d. h. hier jeweils zwischen der Wandung 3 und einem der hier zwei Magnetfeldsensor 4 angeordnet.

Auch das hier dargestellte Kochsystem 200 ist dazu geeignet und ausgeführt, ein erfindungsgemäßes Verfahren zum Betreiben auszuführen.

### Bezugszeichenliste

- 1: Kochgeschirr
- 2: Boden
- 3: Wandung
- 4: Magnetfeldsensor
- 5: Aufnahmevolumen
- 6: Hallsensorelement
- 7: Spulenelement
- 8: Temperatursensor
- 9: Kommunikationseinrichtung
- 10: Wertes einer elektromagnetischen Feldstärke
- 11: Wert einer Temperatur
- 12: Ausgabeeinrichtung
- 13: Temperatursensor
- 14: Griffelement
- 15: Außenseite
- 16: Innenseite
- 50: Steuereinrichtung
- 100: Kochfeldeinrichtung
- 101: Aufstellfläche
- 102: Induktionsspule
- 103: elektromagnetisches Feld
- 200: Kochsystem
- S1: Schwellwert

## Patentansprüche

1. Verfahren zum Betreiben eines Kochsystems (200)
wobei das Kochsystem (200) wenigstens eine Steuereinrichtung (50), wenigstens eine Kochfeldeinrichtung (100) und wenigstens ein Kochgeschirr (1) umfasst,
wobei das Kochgeschirr (1) wenigstens einen Boden (2), wenigstens eine Wandung (3) und wenigstens einen Magnetfeldsensor (4) umfasst, wobei durch den Boden (2) und die Wandung (3) wenigstens ein Aufnahmevolumen (5) begrenzt wird, und wobei der Magnetfeldsensor (4) der Wandung (3) und/oder einem Griffelement (14) des Kochgeschirrs (1) zugeordnet ist, um eine magnetische Feldstärke eines elektromagnetischen Feldes zu ermitteln, sodass eine Einwirkung des elektromagnetischen Feldes auf die Wandung (3) abschätzbar ist,
wobei die Kochfeldeinrichtung (100) wenigstens eine Aufstellfläche (101) zum Aufstellen von Kochgeschirr (1) und wenigstens eine Induktionsspule (102) umfasst, wobei die Induktionsspule (102) wenigstens ein elektromagnetisches Feld (103) zum Heizen von aufgestelltem Kochgeschirr (1) bereitstellt,
wobei die Steuereinrichtung (50) dazu geeignet und ausgebildet ist, anhand eines mittels des Magnetfeldsensors (4) ermittelten Wertes (10) einer elektromagnetischen Feldstärke Rückschlüsse auf eine zu erwartende Erwärmung der Wandung (3) durch das elektromagnetische Feld (103) zu ziehen,
**dadurch gekennzeichnet, dass**
der Magnetfeldsensor (4) wenigstens einen Wert (10) einer elektromagnetischen Feldstärke ermittelt und die Steuereinrichtung (50) anhand des wenigstens einen ermittelten Wertes (10) Rückschlüsse auf eine zu erwartende Erwärmung der Wandung (3) durch das elektromagnetische Feld (103) zieht.

2. Verfahren nach dem vorhergehenden Anspruch, wobei der Wandung (3) des Kochgeschirrs (1) wenigstens ein Temperatursensor (8) zugeordnet ist, welcher wenigstens einen Wert (11) einer Temperatur ermittelt, und dass bei einer Weiterverarbeitung des ermittelten Wertes (11) eine zu erwartende Erwärmung der Wandung durch das elektromagnetische Feld (103) berücksichtigt wird.

3. Verfahren nach einem der beiden vorhergehenden Ansprüche, wobei der ermittelte Wert (10) wenigstens zeitweise mit einem vorbestimmten Schwellwert (S1) verglichen wird.

4. Verfahren nach dem vorhergehenden Anspruch, wobei der ermittelte Wert (11) einer Temperatur korrigiert wird, insbesondere in eine niedrigere Temperatur korrigiert wird, wenn der Wert (10) wenigstens zeitweise größer als der vorbestimmte Schwellwert (S1) ist.

5. Verfahren nach einem der beiden vorhergehenden Ansprüche, wobei das Kochgeschirr (1) wenigstens eine Ausgabeeinrichtung (12) umfasst und/oder mit wenigstens einer Ausgabeeinrichtung (12) in Wirkverbindung steht und dass die Ausgabeeinrichtung (12) wenigstens ein Signal ausgibt, wenn der Wert (10) wenigstens zeitweise größer als der vorbestimmte Schwellwert (S1) ist.

6. Verfahren nach einem der drei vorhergehenden Ansprüche, wobei der Schwellwert (S1) abhängig von einer Leistung der Induktionsspule (102), insbesondere einer in unmittelbarer Umgebung der Induktionsspule bereitgestellten Feldstärke, ist.

7. Verfahren nach einem der vorhergehenden Ansprüche, wobei der Magnetfeldsensor (4) wenigstens abschnittsweise von wenigstens einem Spulenelement (7) bereitgestellt wird, welches wenigstens eine von dem elektromagnetischen Feld bereitgestellte Energie wenigstens teilweise aufnimmt.

8. Verfahren nach einem der vorhergehenden Ansprüche, wobei der Magnetfeldsensor (4) wenigstens abschnittsweise von wenigstens einem Spulenelement (7) bereitgestellt wird und dass das Spulenelement (7) wenigstens eine Information, insbesondere an ein mobiles Endgerät und/oder die Steuereinrichtung, sendet und/oder empfängt.

9. Kochsystem (200) welches eingerichtet und ausgeführt ist zur Durchführung des Verfahrens gemäß einem der vorhergehenden Ansprüche.

10. Kochsystem (200) nach dem vorherigen Anspruch, wobei das Kochgeschirr (1) und/oder die Kochfeldeinrichtung (100) mit der Steuereinrichtung (50) in Kommunikationsverbindung stehen.

11. Kochsystem (200) nach einem der vorhergehenden Ansprüche, wobei der Magnetfeldsensor (4) wenigstens abschnittsweise von einem Hallsensorelement (6), einem Spulenelement (7) und/oder einer Leiterschleife bereitgestellt wird.

12. Kochsystem (200) nach dem vorhergehenden Anspruch, wobei das Hallsensorelement (6), das Spulenelement (7) und/oder die Leiterschleife parallel zu dem Boden (2) des Kochgeschirrs (1) ausgebildet ist.

13. Kochsystem (200) nach einem der vorhergehenden Ansprüche, wobei der Wandung (3) wenigstens ein Temperatursensor (8) zugeordnet ist.

14. Kochsystem (200) nach dem vorhergehenden Anspruch, wobei der Temperatursensor (8) wenigstens abschnittsweise den Magnetfeldsensor (4) bereitgestellt.

15. Kochsystem (200) nach einem der beiden vorhergehenden Ansprüche, wobei der Temperatursensor (8) im Wesentlichen in unmittelbarer Umgebung zum Magnetfeldsensor (4) angeordnet ist und/oder wenigstens eine Kommunikationseinrichtung (9) vorgesehen ist.

## Claims

1. Method for operating a cooking system (200),
the cooking system (200) comprising at least one control device (50), at least one hob device (100) and at least one cooking utensil (1),
the cooking utensil (1) comprising at least one base (2), at least one wall (3) and at least one magnetic field sensor (4), at least one receiving volume (5) being delimited by the base (2) and the wall (3), and the magnetic field sensor (4) being associated with the wall (3) and/or a handle element (14) of the cooking utensil (1) in order to determine a magnetic field strength of an electromagnetic field, so that an effect of the electromagnetic field on the wall (3) can be estimated,
the hob device (100) comprising at least one placement surface (101) for placement of the cooking utensil (1) thereon, and at least one induction coil (102), the induction coil (102) providing at least one electromagnetic field (103) for heating the placed cooking utensil (1),
the control device (50) being suitable and designed to draw conclusions about an expected heating of the wall (3) by the electromagnetic field (103) on the basis of a value (10) of an electromagnetic field strength, which value is determined by means of the magnetic field sensor (4),
**characterised in that**
the magnetic field sensor (4) determines at least one value (10) of an electromagnetic field strength and the control device (50) draws conclusions about an expected heating of the wall (3) by the electromagnetic field (103) on the basis of the at least one determined value (10).

2. Method according to the preceding claim, wherein at least one temperature sensor (8) is associated with the wall (3) of the cooking utensil (1), which sensor determines at least one value (11) of a temperature, and an expected heating of the wall by the electromagnetic field (103) is taken into account when further processing the determined value (11).

3. Method according to either of the two preceding claims, wherein the determined value (10) is compared at least temporarily with a predetermined threshold (S1).

4. Method according to the preceding claim, wherein the determined value (11) of a temperature is corrected, in particular corrected to a lower temperature, if the value (10) is at least temporarily greater than the predetermined threshold (S1).

5. Method according to either of the two preceding claims, wherein the cooking utensil (1) comprises at least one output device (12) and/or is operatively connected to at least one output device (12), and the output device (12) outputs at least one signal when the value (10) is at least temporarily greater than the predetermined threshold (S1).

6. Method according to any of the three preceding claims, wherein the threshold (S1) is dependent on a power of the induction coil (102), in particular a field strength provided in the immediate vicinity of the induction coil.

7. Method according to any of the preceding claims, wherein the magnetic field sensor (4) is provided at least in portions by at least one coil element (7) which at least partially absorbs at least an energy provided by the electromagnetic field.

8. Method according to any of the preceding claims, wherein the magnetic field sensor (4) is provided at least in portions by at least one coil element (7), and the coil element (7) sends at least one piece of information, in particular to a mobile terminal and/or the control device, and/or receives same.

9. Cooking system (200) which is designed and configured to carry out the method according to any of the preceding claims.

10. Cooking system (200) according to the previous claim, wherein the cooking utensil (1) and/or the hob device (100) are communicatively connected to the control device (50).

11. Cooking system (200) according to any of the preceding claims, wherein the magnetic field sensor (4) is provided at least in portions by a Hall sensor element (6), a coil element (7) and/or a conductor loop.

12. Cooking system (200) according to the preceding claim, wherein the Hall sensor element (6), the coil element (7) and/or the conductor loop is formed parallel to the base (2) of the cooking utensil (1).

13. Cooking system (200) according to any of the preceding claims, wherein at least one temperature sensor (8) is associated with the wall (3).

14. Cooking system (200) according to the preceding claim, wherein the temperature sensor (8) provides the magnetic field sensor (4) at least in portions.

15. Cooking system (200) according to either of the two preceding claims, wherein the temperature sensor (8) is arranged substantially in the immediate vicinity of the magnetic field sensor (4), and/or at least one communication device (9) is provided.

## Revendications

1. Procédé permettant de faire fonctionner un système de cuisson (200)
dans lequel le système de cuisson (200) comprend au moins un dispositif de commande (50), au moins un dispositif formant plaque de cuisson (100) et au moins un ustensile de cuisson (1),
dans lequel l'ustensile de cuisson (1) comprend au moins un fond (2), au moins une paroi (3) et au moins un capteur de champ magnétique (4), dans lequel au moins un volume de réception (5) est délimité par le fond (2) et la paroi (3), et dans lequel le capteur de champ magnétique (4) est associé à la paroi (3) et/ou à un élément de préhension (14) de l'ustensile de cuisson (1) afin de déterminer une intensité de champ magnétique d'un champ électromagnétique, de sorte qu'une action du champ électromagnétique sur la paroi (3) peut être estimée,
dans lequel le dispositif formant plaque de cuisson (100) comprend au moins une surface de pose (101) permettant de poser des ustensiles de cuisine (1) et au moins une bobine d'induction (102), dans lequel la bobine d'induction (102) fournit au moins un champ électromagnétique (103) permettant de chauffer les ustensiles de cuisine (1) posés,
dans lequel le dispositif de commande (50) est adapté et configuré pour tirer des conclusions concernant un échauffement attendu de la paroi (3) par le champ électromagnétique (103) à l'aide d'une valeur (10) d'une intensité de champ électromagnétique, laquelle valeur est déterminée au moyen du capteur de champ magnétique (4),
**caractérisé en ce que**
le capteur de champ magnétique (4) détermine au moins une valeur (10) d'une intensité de champ électromagnétique et le dispositif de commande (50) tire des conclusions concernant un échauffement attendu de la paroi (3) par le champ électromagnétique (103) à l'aide de l'au moins une valeur (10) déterminée.

2. Procédé selon la revendication précédente, dans lequel au moins un capteur de température (8) est associé à la paroi (3) de l'ustensile de cuisson (1), lequel capteur de température détermine au moins une valeur (11) d'une température, et en ce que, lors d'un traitement ultérieur de la valeur (11) déterminée, on tient compte d'un échauffement attendu de la paroi par le champ électromagnétique (103).

3. Procédé selon l'une des deux revendications précédentes, dans lequel la valeur (10) déterminée est comparée au moins temporairement avec une valeur seuil (S1) prédéterminée.

4. Procédé selon la revendication précédente, dans lequel la valeur (11) déterminée d'une température est corrigée, en particulier corrigée en une température plus basse, lorsque la valeur (10) est au moins temporairement supérieure à la valeur seuil (S1) prédéterminée.

5. Procédé selon l'une des deux revendications précédentes, dans lequel l'ustensile de cuisson (1) comprend au moins un dispositif de sortie (12) et/ou est en liaison active avec au moins un dispositif de sortie (12) et en ce que le dispositif de sortie (12) délivre en sortie au moins un signal lorsque la valeur (10) est au moins temporairement supérieure à la valeur seuil (S1) prédéterminée.

6. Procédé selon l'une des trois revendications précédentes, dans lequel la valeur seuil (S1) dépend d'une puissance de la bobine d'induction (102), en particulier d'une intensité de champ fournie dans l'environnement immédiat de la bobine d'induction.

7. Procédé selon l'une des revendications précédentes, dans lequel le capteur de champ magnétique (4) est fourni au moins en partie par au moins un élément formant bobine (7) qui absorbe au moins partiellement au moins une énergie fournie par le champ électromagnétique.

8. Procédé selon l'une des revendications précédentes, dans lequel le capteur de champ magnétique (4) est fourni au moins en partie par au moins un élément formant bobine (7) et en ce que l'élément formant bobine (7) envoie au moins des informations, en particulier à un terminal mobile et/ou au dispositif de commande, et/ou les reçoit en provenance de ceux-ci.

9. Système de cuisson (200), lequel est réalisé et configuré pour mettre en œuvre le procédé selon l'une des revendications précédentes.

10. Système de cuisson (200) selon la revendication précédente, dans lequel l'ustensile de cuisson (1) et/ou le dispositif formant plaque de cuisson (100) sont en connexion de communication avec le dispositif de commande (50).

11. Système de cuisson (200) selon l'une des revendications précédentes, dans lequel le capteur de champ magnétique (4) est fourni au moins en partie par un élément formant capteur à effet Hall (6), un élément formant bobine (7) et/ou une boucle conductrice.

12. Système de cuisson (200) selon la revendication précédente, dans lequel l'élément formant capteur à effet Hall (6), l'élément formant bobine (7) et/ou la boucle conductrice sont réalisés parallèlement au fond (2) de l'ustensile de cuisson (1).

13. Système de cuisson (200) selon l'une des revendications précédentes, dans lequel au moins un capteur de température (8) est associé à la paroi (3).

14. Système de cuisson (200) selon la revendication précédente, dans lequel le capteur de température (8) fournit au moins en partie le capteur de champ magnétique (4).

15. Système de cuisson (200) selon l'une des deux revendications précédentes, dans lequel le capteur de température (8) est disposé sensiblement dans l'environnement immédiat du capteur de champ magnétique (4) et/ou au moins un dispositif de communication (9) est prévu.
